# EUROPÄISCHE PATENTSCHRIFT

(11) **EP 3 342 471 B1**
(45) Veröffentlichungstag und Bekanntmachung des Hinweises auf die Patenterteilung: **29.04.2020**
(21) Anmeldenummer: 17150196.8
(22) Anmeldetag: 03.01.2017
(51) Int. Cl.: B01D 35/30

(54) **FILTER MIT VERSTÄRKTER DECKELBEFESTIGUNG**
FILTER WITH REINFORCED LID FASTENING
FILTRE AVEC SYSTEME RENFORCE DE FERMETURE DU COUVERCLE

(43) Veröffentlichungstag der Anmeldung: 04.07.2018
(73) Patentinhaber: Schätzle Holding GmbH, 63768 Hösbach (DE)
(72) Erfinder: PFAFF Karl-Heinz, 63856 Bessenbach (DE)
(74) Vertreter: Pöhner, Wilfried Anton

(56) Entgegenhaltungen:
- FR-A1- 2 929 132
- US-A- 3 295 689
- US-A1- 2015 014 256

## Beschreibung

Die vorliegende Erfindung beschäftigt sich mit einem Filter, insbesondere Kerzenfilter, nach dem Oberbegriff des Anspruchs 1.

Unter Filtration versteht man in der Fluidtechnik das Klären oder Reinigen einer Suspension bei der unerwünschte Feststoffe in Partikelform aus einem Fluid, also einem flüssigen oder gasförmigen Medium, entfernt werden. Je nach Größe der zu entfernenden Teilchen oder Partikel spricht man von normaler, Mikro oder Nanofiltration. Von Mikrofiltration ist die Rede sobald alle bei Teilchen über einer Größe von 0,1 Mikrometer zurückgehalten oder ,herausgefiltert' werden sollen. Üblicherweise ist das gewünschte Ergebnis ein möglichst partikelfreies Filtrat, während die im Filter zurückbleibenden Feststoffe entsorgt werden, doch kann es sich auch anders verhalten und die Feststoffe wirtschaftlich wertvoll sein.

Solche Partikelgrößen kommen bei großtechnischen Vorgängen vor allem in der Herstellung bzw. Verfeinerung von Öl, d.h. Speiseöl, und der Klärung von Säften vor, aber auch wenn eine zum Reinigen oder Spülen eines Geräts oder einer Maschine verwendete Flüssigkeit wieder von aufgenommenen Verunreinigungen geklärt und so für eine erneute Verwendung vorbereitet werden soll. Die technische Umsetzung einer solchen Filtration beruht auf dem Prinzip des mechanischen Ausschlusses: in eine Filtermembran werden Poren einer gewissen Größe eingebracht, so dass nur Teilchen unter der Porengröße passieren können, womit das Durchdringen von Teilchen oder Partikeln, deren Größe über die Porengröße hinausgeht, verhindert wird. In einem Filter sind können mehrere solcher Membranen vorhanden und parallel und/oder seriell angeordnet sein, wobei die Porengröße der Membranen sich oft in Flussrichtung des Fluides, sukzessive verringert um erst gröbere und dann immer feinere Teilchen herauszufiltern. Dabei bildet sich suspensionsseitig ein Filterkuchen genannte Schicht von abgelagerten Feststoffpartikeln, die im Laufe eines Filterzyklus immer weiter wächst. Um einen Fluidstrom durch den Filter, d.h. die Filtermembran und den Filterkuchen, zu gewährleisten ist ein gewisser Druck nötig, der sich, bei gleichbleibendem Durchfluss mit zunehmender Filterkuchendicke erhöht, bzw. bei konstantem Druck verringert sich mit zunehmender Filterkuchendicke die Durchflussmenge. Wenn entweder der Druck einen maximal zulässigen oder bereitstellbaren Druck überschreitet, oder der Filterkuchen eine maximal zulässige Dicke erreicht hat, muss der Filter, d.h. die Filtermembranen, ausgetauscht oder gereinigt werden. Dieser Reinigungs- oder Austauschvorgang stellt den Abschluss eines Filterzyklus dar. Der beim Betrieb auftretende Druck kann aber auch andere Verläufe aufweisen, etwa einen pulsartigen Betrieb mit Phasen niedrigen und Phasen hohen Drucks, bzw. Druckspitzen. Dies ist z.B. der Fall, wenn das zu filternde Fluid mittels Pumpen gefördert wird und diese zyklisch oder auch unregelmäßig ein- und ausgeschaltet werden, oder wenn sich durch Öffnen oder Schließen von Ventilen der Zirkulation im System ändert.

Im großtechnischen Einsatz werden im Wesentlichen zwei verschiedene Arten Filter eingesetzt nämlich Beutelfilter und Kerzenfilter. Bei Ersteren ist der Filter als eine Tasche oder ein Beutel ausgebildet, der von innen nach außen von dem zu filtrierenden Fluid durchströmt wird. Die andere großtechnisch eingesetzte Filterart sind Kerzenfilter, welche im Allgemeinen ein Gehäuse mit einem kreisförmigen Querschnitt besitzen, welches zumindest an einer oberen Stirnseite offen ist und dort mittels eines Deckels lösbar verschlossen werden kann. In dieses Filtergehäuse wird einer oder werden mehrere Filterkerzen eingelassen, die im Betrieb von außen nach innen von einem Fluid durchströmt sind. Damit die zu filternde Suspension in das Filtergehäuse gelangen kann, muss dieses über mindestens zwei weitere Öffnungen verfügen, nämlich einen (Suspensions-)Ein- und einen (Filtrat-) Auslass, wobei üblicherweise Ersterer an einer Seite des zylindrischen Gehäuses und letzterer an der unteren Stirnseite angebracht ist.

Kerzenfilter haben gegenüber Taschenfiltern folgende Vorteile: Zum einen bilden sie ein geschlossenes System, in dem keinerlei Tropfverluste auftreten. Zum anderen ermöglichen sie durch entsprechende Formgebung der Membran der Filterkerze eine größere Filteroberfläche pro Volumen. Und nicht zuletzt haben sie konstruktionsbedingt eine bessere Regenerierbarkeit, d.h. sie lassen sich leichter reinigen. Eine solche Reinigung erfolgt entweder mittels durch ein gasförmiges Medium entgegen der Filtrierrichtung eingebrachter Druckpulse, unter Umständen mit zusätzlicher Einbringung einer Reinigungsflüssigkeit, oder mittels eines Durchströmens des Filters durch eine Reinigungsflüssigkeit, im allgemeinen Wasser oder destilliertes Wasser in Filtrierrichtung, wobei die Durchflussrate und/oder der Druck gegenüber dem normalen Betrieb deutlich erhöht sind. Im ersten Fall wird der Filterkuchen mit wenigen Druckstößen quasi abgesprengt, im Zweiten werden die ausgefilterten Teilchenrückstände des Filterkuchens nach und nach aus dem Filter ausgeschwemmt.

Egal ob sie bei einer Reinigung oder im Rahmen des Filterbetriebs auftreten, stellen hohe Druckpulse eine starke Belastung für das Filtergehäuse und hierbei insbesondere für die Deckelbefestigung dar. Bei Kerzenfiltern, deren Gehäuse üblicherweise einen im Wesentlichen kreisförmigen Querschnitt aufweisen, werden in der Regel kreisscheibenförmige, massive Deckel eingesetzt, die üblicherweise mittels zweier oder mehrere Laschenpaare, welche an den Seiten des Filtergehäuses nahe der oberen Stirnseite befestigt sind, festgehalten werden. Dazu werden von den paarigen Laschen Bolzen mit Augenschrauben gehalten, die in im Deckel vorhandene Aussparungen geklappt und von oben mit Kontermuttern gesichert werden. Alternativ können auch Klammerschrauben zum Einsatz kommen, die die Oberseite des Deckels und eine Unterseite einer zwischen den Laschen eingeschweißten Brücke klammerartig umgreifen.

In manchen Kerzenfiltern nach dem Stand der Technik besteht zwischen den oberen Stirnseiten der Laschen und dem Deckel ein gewisser Abstand, d.h. es bleibt dort ein Luftspalt frei. Dies führt nun dazu, dass der Deckel sich unter starker Druckbelastung in der Mitte aufwölbt und am Rande absenken kann, d.h. es kommt zu einer starken Verformung des Deckels mit gleichzeitiger axialer Belastung und Verformung der Laschen. Besonders bei gepulstem Betrieb mit häufigen Lastwechseln sind diese Verformungen für die üblicherweise relativ dünn ausgeführten und an das Gehäuse außen angeschweißten Laschen sowie die ganze Einheit aus Laschen-Bolzen-Augenschrauben eine massive Belastung, woraus eine relativ kurze Lebensdauer der Deckelbefestigung resultiert.

Es kommt zudem auch vor, dass beim Befestigen des Deckels die Kontermuttern der Augenschrauben zu fest anzogen werden und die Befestigungseinheiten und besonders die Laschen dadurch eine plastische Verformung erfahren, wodurch ihre Festigkeit und damit die im Betrieb möglichen Spitzendrücke bzw. die Lebensdauer signifikant vermindert werden.

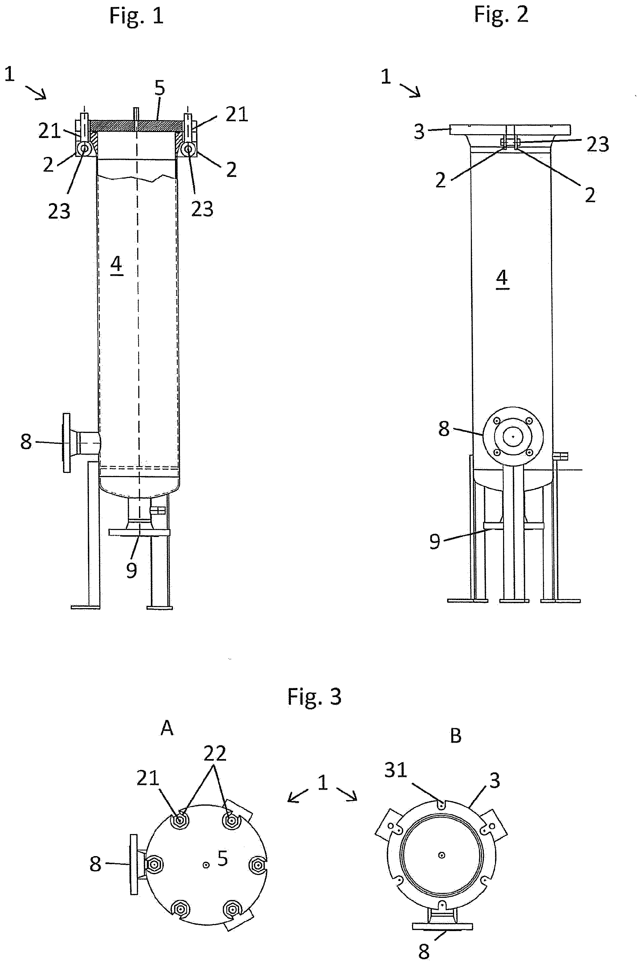

In der Anmeldeschrift FR 2 929 132 A1 ist beispielsweise ein Filter offenbart, bei dem das Filtergehäuse an seiner offenen Stirnseite einen innenliegenden Falz mit einem Dichtring aufweist, auf welchem der Deckel in befestigtem Zustand aufliegt (Fig. 2). Auch bei dieser Ausführung verbleibt zwischen der oberen Stirnseite der an der Außenseite des Gehäuses angebrachten, laschenförmigen Befestigungsmittel und dem aufliegenden Deckel ein Luftspalt.

In Kerzenfiltern gemäß der Schriften US 3 295 689 A oder US 2015/014256 A1 ist an der offenen Stirnseite des Gehäuses ein Flansch vorhanden, auf welchem der Deckel in befestigtem Zustand aufliegt. Als Deckelbefestigungsmittel dienen paarige Laschen, die mit Ihrer Oberseite am Flansch und mit einer anderen Seite an der Außenseite des Filtergehäuses befestigt sind.

Vor diesem Hintergrund stellt sich vorliegende Erfindung die Aufgabe, eine stabilere und langlebigere Deckelbefestigung zu finden, welche sowohl im Betrieb auftretenden Druckbelastungen besser widerstehen können sowie bei unsachgemäßem Befestigen des Deckels nicht so leicht Schaden nehmen.

Gelöst wird dieses Problem durch einen Filter, insbesondere Kerzenfilter, mit dem in Anspruch 1 angegebenen Merkmalen, insbesondere einem am Filtergehäuse angebrachten Flansch, an welchem die oberen Stirnseiten der Befestigungsmittel plan und direkt anliegen, wobei die wesentliche Neuerung darin besteht, dass auf Schweißnähte zwischen den Laschen und der Außenseite des Zylinders vollständig verzichtet, und dort ein Abstand belassen wird. D.h. die Laschen sind erfindungsgemäß nur an der Unterseite des Flansches befestigt. Dies bewirkt, dass die durch den Deckel verursachten Kräfte wesentlich gleichmäßiger ab- und in das Filtergehäuse eingeleitet werden, als dies bei der bisherigen Deckelbefestigung nach dem Stand der Technik der Fall war. Die übrigen Merkmale eines Kerzenfilters müssen dabei in keiner Weise verändert werden, d.h. die Erfindung eignet sich auch zur Nachrüstung in schon vorhandenen Systemen, bzw. die bisher verwandten Herstellungsmethoden für Kerzenfilter können fast unverändert übernommen werden. Denn das Hinzufügen von Flanschen, auch von Vollflanschen, an zylinderförmigem Metallgehäuse, ist nach dem Stand der Technik wohl verstanden.

Vorteilhaft ist dabei insbesondere die Verwendung eines Vollflansches, auf dem der Deckel mit seinem Rand plan aufliegt, so dass der Flansch die durch einen druckbelasteten und teilverformten Deckel induzierten Kräfte aufnimmt und gleichmäßig in das Filtergehäuse einleitet. Dadurch ist einerseits die mögliche Verformung des Deckels bei gleicher Deckeldichte reduziert, und zweitens ist eine Belastung der Schweißnaht der Laschen entweder nicht mehr gegeben oder zumindest stark reduziert.

Durch die verringerte axiale Belastung der Befestigungsmittel, insbesondere Laschen, sind auch die auf deren Verbindung mit dem Gehäuse wirkenden Scherkräfte verringert, bzw. falls eine Flansch vorhanden ist, ganz eliminiert, wodurch sich als wesentliche positive Konsequenz die Lebensdauer der Befestigung und damit die Zeit zwischen Reparaturen des Kerzenfilters massiv verlängert.

Alternativ ist es auch möglich, die erhöhte Festigkeit der erfindungsgemäßen verstärkten Deckelbefestigung dazu zu nutzen, beim Reinigen mit höheren Spitzendrücken zu arbeiten, was eine gründlicher und schnellere Reinigung ermöglicht.

Vorteilhafte Weiterbildungen vorliegender Erfindung, die einzeln oder in Kombination realisierbar sind, sofern sie sich nicht gegenseitig ausschließen, sollen im Weiteren näher erläutert werden.

Besonders stabil und langlebig seiner Ausführung erfindungsgemäßer Deckelbefestigung auf einem Kerzenfilter dann, wenn Oberrand, d.h. an der oben offenen Stirnseite des Kerzenfiltergehäuses, ein Flansch vorhanden ist. Dabei ist ein vollumlaufender Flansch, d.h. ein ringförmiger Flansch der das Gehäuse komplett umläuft, einem Teilflansch vorzuziehen. Im Flansch sind Bohrungen zur Durchführung eines Bolzens oder einer Augenschraube vorhanden, die es erlauben, dass die von den am Flansch befestigten Laschenpaaren gehaltenen Bolzen oder Augenschrauben bis in die Schäfte aufnehmende Gewindebohrungen des Deckels durchführbar sind. Dabei ist vorteilhafterweise darauf zu achten, dass die Bohrung des Flansches mit den Gewindelöchern im Deckel als auch mit den paarigen Laschen fluchten. D.h. die Bohrlöcher sollten im Zwischenraum zwischen den in Paaren angeordneten Befestigungs- oder Haltelaschen münden.

Eine besonders vorteilhafte Anordnung der Befestigungsvorrichtung, also der Laschen nebst Bohrlöchern im Flansch mit diesen fluchtenden Gewindebohrungen im Deckel, ist dann gegeben, wenn diese auf den Ecken eines Vielecks oder Polygons angeordnet sind. Der Vorteil ist hierbei, dass die bei einem Druckbetrieb entstehenden Kräfte gleichmäßiger aufgenommen werden, was die Lebensdauer aller Teile weiter erhöht bzw. wie oben bereits erwähnt höhere Reinigungsspitzendrücke möglich werden lässt.

Wird eine ausreichend große Zahl von erfindungsgemäßen Befestigungsmöglichkeiten, das heißt mit der Filtergehäuse und/oder dem Flansch verbundene Befestigungsmittel sowie damit fluchtende Bohrungen und/oder Gewindelöcher in Deckel und Flansch vorgesehen, und werden die zur Befestigung des Deckels eingesetzten Bolzen oder Schrauben ausreichend stabil ausgelegt, so ist es bei einem Filter- oder Reinigungsbetrieb des erfindungsgemäßen Kerzenfilters mit vergleichsweise niedrigeren Spitzendrücken ausreichend, wenn nur ein Teil der Befestigungsmöglichkeiten tatsächlich verwendet wird. Dies hat den Vorteil, dass bei Ausfall eines Befestigungsmittels, z.B. durch Materialermüdung, aber auch durch unsachgemäße Behandlung und dergleichen, noch weitere Befestigungsmöglichkeiten als ,Reserve' vorhanden sind. Ist dies so gelöst, dass primär verwendete und ,Reserve' Befestigungsmöglichkeiten keine Überschneidung besitzen und beide gleichseitige Vielecke bilden, so bleibt bei einem etwaigen Wechsel von den primären auf die Reserve-Befestigungsmöglichkeiten der oben beschriebene Vorteil einer gleichmäßigen Krafteinleitung weiter erhalten.

Werden zum Beispiel sechs hexagonal angeordnete Befestigungsmöglichkeiten vorgesehen, aber bei einem regulären Betrieb reichen drei, ,Primäre', davon zur sicheren Befestigung des Deckels schon aus, so können sie als ein gleichseitiges Dreieck gewählt werden und die verbliebenen, nicht verwendeten drei Befestigungsmöglichkeiten bilden eine weiteres gleichseitiges Dreieck als Reserve. Sowohl bei Verwendung der Primären als auch der sekundären Befestigungsmöglichkeiten ist so eine gleichmäßige Ableitung der axialen Kräfte vom Deckel in das Gehäuse des Kerzenfilters gegeben.

Wenn ein Flansch zur Kräfteaufnahme vorhanden ist, dann hat dies den Vorteil, dass sich der Deckel auch unter Druck weniger verformen kann, da eine größere Auflagefläche vorhanden ist. Dies bedingt zum einen eine größere Dichtigkeit, so dass weniger Fluid aus dem Inneren entweichen kann, zum anderen reduziert sich auch die Materialermüdung des Deckels. In besonders vorteilhafter Weise werden nicht wie vorher die Befestigungslaschen selbst einem axialen Druck ausgesetzt, sondern dieser wird von dem idealerweise als integraler Teil des Gehäuses ausgeformten Flansch aufgenommen. Dadurch ist es möglich, die Laschen an der Unterseite des Flansches anzubringen, d.h. dort anzuschweißen und auf eine Verbindung mit der Außenseite des Gehäuses kann verzichtet werden. Falls gewünscht ist dies aber, z.B. zur zusätzlichen Stabilisierung ebenfalls noch möglich.

Es bietet sich aus Platzgründen und zur Vermeidung eines unnötigen Materialeinsatzes an, den Durchmesser des üblicherweise gleich dem Querschnitt des Filtergehäuses runden Deckels so zu wählen, dass sein Rand mit einem Rand des Flansches fluchtet, also nicht darüber übersteht.

Der Deckel des erfindungsgemäßen Kerzenfilters mit verstärkter Deckelbefestigung kann auf unterschiedliche Arten lösbar mit dem Gehäuse befestigt werden. Die dem Stand der Technik entsprechende Methode wäre, als Befestigungsmittel im Bereich der oberen, offenen Stirnseite des Gehäuses Paare parallel ausgerichteter, zueinander beabstandeter Laschen vorzusehen, die zwischen sich Augen- oder Mehrkantschrauben aufnehmen können. Letztere werden von unten durch im Flansch mit den Zwischenräumen der Laschenpaare fluchtend eingebrachte Bohrungen oder Aussparungen geführt und durch im Deckel vorhandene Bohrungen gesteckt, so dass ein Teil des Schaftes über die Oberseite des Deckels übersteht und die Schrauben mit einer Kontermutter gesichert werden können. Augenschrauben können mit durch das Auge gesteckten Bolzen gegen verdrehen gesichert werden, wohingegen bei Mehrkant und insbesondere Vierkantschrauben die Seiten der Laschen selbst als Fixierung dienen können.

Es wäre aber auch denkbar, die Schrauben von oben durch den Deckel und den Flansch zu stecken und in Gewinde einzuschrauben, welche in und/oder unterhalb des Flansches vorhanden sind, etwa zwischen Laschenpaaren gehaltene Kontermuttern an den Flansch oder an das Filtergehäuse angeschweißte Muttern oder in im Flansch selbst vorhandene Gewindelöcher.

Weitere Einzelheiten, Merkmale und Vorteile vorliegender Erfindung ergeben sich aus den im Folgenden anhand der Figuren näher vorgestellten und erläuterten bevorzugten Ausführungsformen. Dies dient nur der Beschreibung der Erfindung und soll sie in ihrer Allgemeinheit in keiner Weise einschränken.

Im Einzelnen zeigen:
- Figur 1:: Seitenansicht und Teilschnitt durch eine Ausführungsform des erfindungsgemäßen Kerzenfilters mit verstärkter Befestigung.
- Figur 2:: Eine weitere Seitenansicht des Kerzenfilters aus Figur 1, jedoch um 90 Grad gedreht und ohne Teilschnitt
- Figur 3:: Zwei Draufsichten auf den Kerzenfilter aus Figur 1, einmal mit und einmal ohne aufgesetzten Deckel.

Figur 1 und 2 zeigen zwei Seitenansichten des erfindungsgemäßen Filters als Kerzenfilters 1 mit verstärkter Befestigung, bei dem an einer oberen offenen Stirnseite des Filtergehäuses 4 ein vollumlaufender Flansch 3 vorhanden ist, an dessen Unterseite paarig parallel ausgerichtete und beabstandete Laschen 2 angeschweißt sind, die jeweils zur Aufnahme eines durch das Auges einer Augenschraube 21 geführten Bolzens 23 dienen. Die Schäfte der Augenschrauben 21 werden in Aussparungen 31 im Flansch 3 im Deckel 5 geklappt, und der Deckel 5 befestigt, indem die Schrauben 21 von oben mit Kontermuttern 22 gesichert werden. Somit wird erreicht, dass im geschlossenen Zustand der plan auf dem Flansch 3 aufliegenden Deckel 5 eine sehr große Kontakt- und Auflagefläche mit dem Flansch 3 des Filtergehäuses 4 hat. Somit kann bei auch einer starken Druckbelastung des Deckels 5 keine oder kaum eine Verformung entstehen, und die auftretenden axialen Kräfte werden vorteilhafterweise sehr gleichmäßig in das Filtergehäuse 4 eingeleitet und insbesondere wird eine Belastung der Befestigungslaschen 2 so gut wie vollständig vermieden, und stattdessen der als integraler Teil des Gehäuses 4 ausgeführte Flansch 3 belastet. Der Deckel ist nur in Figur 1 aber nicht in Figur 2 gezeigt. Er wurde dort weggelassen, um den Flansch 3 deutlicher sichtbar zu machen.

Figur 3 zeigt zwei Draufsichten auf den erfindungsgemäßen Filter als Kerzenfilter 1 mit verstärkter Deckelbefestigung nach Figur 1 und 2, einmal mit aufgesetztem und per von unten zwischen die Laschenpaare 2 eingeschobener, dort von Bolzen 23 gehaltener und oben mit einer Kontermutter 22 gesicherter Augenschrauben 21 befestigtem Deckel 5 (Teilansicht A) und einmal ohne Deckel 5 (Teilansicht B). Zu sehen sind in Teilansicht A der Deckel 5 mit den Aussparungen 31 des Flansches 3 fluchtenden Aussparungen sowie die dort eingeklappten Schäfte der Augenschrauben 21 und die oben aufgeschraubten Kontermuttern 22. Teilansicht B zeigt deutlich den vollumlaufenden Flansch 3 mit Aussparungen 31. Durch Verwendung eines Vollflansches 3 und darin in der Form eines gleicheckigen Sechseckes oder Hexagons eingelassenen Aussparungen 31 wird eine besonders gleichmäßige und gute Krafteinleitung vom Deckel 5 in das Gehäuse 4 bewirkt, und somit die Lebensdauer bzw. die Zeit zwischen zwei Reparaturen der Deckelbefestigung und damit des Kerzenfilters 1 massiv gesteigert.

Auch ist es möglich, falls die Schrauben 21 und Bolzen 23 im Hinblick auf die im Filter- oder Reinigungsbetrieb auftretenden Spitzendrücke bzw. Druckspitzen genügend stabil ausgelegt sind, nur einen Teil der 6 gezeigten Befestigungsmöglichkeiten zu verwenden. In einer besonders bevorzugten Ausführung bietet es sich an, genau drei der sechs Befestigungsmöglichkeiten als ,primäre' Befestigungen zu verwenden und diese als ein gleichseitiges Dreieck auszuwählen. Dadurch wird zunächst einmal erreicht, das die Krafteinleitung der auftretenden Axialkräfte vom Deckel 5 über den Flansch 3 in das Filtergehäuse 4 bei Verwendung dieser primären Befestigungsmöglichkeiten gleichmäßig erfolgt. Da die Gesamtheit aller sechs Befestigungsmöglichkeiten aber vorteilhafterweise ein gleichseitiges Hexagon bilden, bleibt dieser Vorteil auch bestehen wenn eine oder mehrere der primären Befestigungsmöglichkeiten ausfällt und auf die Reservebefestigungen gewechselt werden muss. Alternativ ist es natürlich auch möglich, alle Befestigungsmöglichkeiten zu verwenden und entweder höhere Druckspitzen widerstehen zu können oder eine längere Lebensdauer bis zu einem Ermüdungsbruch eines Bolzens 21 oder einer Befestigungsmöglichkeit zu erhalten.

### Bezugszeichenliste

- 1: Kerzenfilter
- 2: Befestigungslasche
- 21: Augenschraube
- 22: Kontermutter
- 23: Bolzen
- 3: Flansch zur Deckelauflage
- 31: Aussparung
- 4: Filtergehäuse
- 5: Deckel
- 8: Einlassöffnung
- 9: Auslassöffnung

## Patentansprüche

1. Filter, umfassend
- ein Filtergehäuse (4) mit einer offenen Stirnseite und einem integral verbundenen Flansch (3), und
- ein auf der offenen Stirnseite lösbar befestigter Deckel (5), wobei an einer Außenseite des Filtergehäuses (4) im Bereich der offenen Stirnseite als Befestigungsmittel zur lösbaren Befestigung des Deckels (5) Paare von zueinander parallelen und beabstandeten Laschen (2) vorhanden sind, die einen Zwischenraum definieren, der zur Aufnahme von Bolzen (23) mit Augenschrauben (21), Mehrkantschrauben oder Muttern geeignet ist, und
wobei die Laschen (2) direkt und plan an einer Unterseite des Flansches (3)anliegen,
**dadurch gekennzeichnet, dass**
die Laschen (2) ausschließlich mit dem Flansch (3) verbunden sind.

2. Filter nach Anspruch 1, **dadurch gekennzeichnet, dass** der Flansch (3) ein vollumlaufender ringförmiger Flansch ist.

3. Filter nach Anspruch 2, **dadurch gekennzeichnet, dass** in dem Flansch (3) Bohrungen oder Aussparungen (31) zum Durchführen eines Bolzens, einer Mehrkantschraube oder einer Augenschraube (21) vorhanden sind.

4. Filter nach Anspruch 3, **dadurch gekennzeichnet, dass** die Bohrungen oder Aussparungen (31) mit im Deckel (5) vorhandenen Bohrungen, Aussparungen oder Gewindelöchern fluchten.

5. Filter nach einem der Ansprüche 3 oder 4, **dadurch gekennzeichnet, dass** die Bohrungen oder Aussparungen (31) auf einer Unterseite des Flansches (3) in den Zwischenräumen der Laschenpaare (2) münden.

6. Filter nach einem der Ansprüche 1-5, **dadurch gekennzeichnet, dass** ein Rand des Flansches (3) mit einem Rand des Deckels (5) fluchtet.

7. Filter nach einem der Ansprüche 1-6, **dadurch gekennzeichnet, dass** die Positionen der Laschenpaare (2) ein im Wesentlichen gleichseitiges Vieleck bilden.

8. Filter nach einem der Ansprüche 1-7, **dadurch gekennzeichnet, dass** der Deckel (5) mittels Schrauben, insbesondere Mehrkant- oder Augenschrauben (21) und einer Kontermutter (22) lösbar auf dem Filtergehäuse (4) befestigt ist.

9. Filter nach Anspruch 8, **dadurch gekennzeichnet, dass** im Deckel (5) Gewindelöcher zur Aufnahme der Gewinde der Schrauben (21) vorhanden sind.

10. Filter nach Anspruch 8, **dadurch gekennzeichnet, dass** wenigstens ein Teil der Schrauben (21) von unten eingesteckt sind, so dass Schraubenköpfe der Schrauben (21) in den Zwischenräumen zwischen den Laschen (2) zu liegen kommen und durch die Laschen (2) gegen Drehung fixiert sind.

11. Filter nach Anspruch 8 oder 9, **dadurch gekennzeichnet, dass** wenigstens ein Teil der Schrauben (21) von oben nach unten durch im Deckel (5) vorhandene Löcher gesteckt sind.

12. Filter nach Anspruch 11, **dadurch gekennzeichnet, dass** der Teil der Schrauben (21), der von oben nach unten durch den Deckel (5) gesteckt sind, in Befestigungsmittel eingedreht sind, die als zwischen paarigen Laschen (2) gehaltenen Kontermuttern (22) oder als fest mit einem Flansch oder einer Außenseite des Filtergehäuses verschweißten Muttern ausgebildet sind.

13. Filter nach Anspruch 1, **dadurch gekennzeichnet, dass** der Flansch (3) mit einer auf einer Unterseite tangential umlaufenden Kerbe oder Kröpfung versehen ist und die Befestigungsmittel des Deckels (5) als Klammerschrauben ausgebildet sind, die auf einer Oberseite des Deckels (5) und auf der Unterseite des Flansches in die Kröpfung oder Kerbe klemmenartig eingreifen.

14. Filter nach einem der vorhergehenden Ansprüche, **dadurch gekennzeichnet, dass** als Ausfallreserve mehr Befestigungsmöglichkeiten bestehend aus Befestigungsmitteln und Bohrungen, Gewindelöchern oder Aussparungen des Deckels und des Flansches vorhanden sind als zum ordentlichen Betrieb des Filters benötigt werden.

## Claims

1. Filter, comprising
- a filter housing (4) with an open face and an integrally connected flange (3), and
- a lid (5), removably attached to the open face,
wherein at an outer face of the filter housing (4), in the region of the open face, as fastening means for removably attaching the lid (5) are provided pairs of mutually parallel and spaced-apart mounting plates (2) defining an interspace that is suited to house bolts (23) with eye bolts (21), polygonal head screws or nuts, and
wherein the mounting plates (2) are fitting directly and levelly to a bottom face of the flange (3),
**characterized in that**
the mounting plates (2) are connected exclusively to the flange (3).

2. Filter according to claim 1, **characterized in that** the flange (3) is a circumferential ring-shaped flange.

3. Filter according to claim 2, **characterized in that** in the flange (3) there are provided bores and recesses (31) for passing through a bolt, a polygonal head screw or an eye bolt (21).

4. Filter according to claim 3, **characterized in that** the bores or recesses (31) align with bores, recesses or threaded holes provided in the lid (5).

5. Filter according to one of claims 3 or 4, **characterized in that** the bores or recesses (31) end on the bottom face of the flange (3) inside the interspaces of the pairs of mounting plates (2).

6. Filter according to one of the claims 1-5, **characterized in that** an edge of the flange (3) aligns with an edge of the lid (5).

7. Filter according to one of the claims 1-6, **characterized in that** the positions of the pairs of mounting plates (2) form a substantially equilateral triangle.

8. Filter according to one of the claims 1-7, **characterized in that** the lid (5) is removably attached to the filter housing (4) by means of screws, in particular polygonal head screws or eye bolts (21) and a nut (22).

9. Filter according to claim 8, **characterized in that** in the lid (5) are provided threaded holes for accepting the threads of the screws (21).

10. Filter according to claim 8, **characterized in that** at least a part of the screws (21) is inserted from below, such that the screw heads of the screws (21) come to lie in the interspaces between the mounting plates (2) and are thereby prevented from turning.

11. Filter according to claim 8 or 9, **characterized in that** at least part of the screws (21) is passed through the holes provided in the lid (5) from above.

12. Filter according to claim 11, **characterized in that** the part of the screws (21) that is passed from above through the holes in the lid, is screwed into fasteners in the form of nuts (22) held between the pairs of mounting plates (2) or in the form of nuts securely welded to a flange or an outer face of the filter housing.

13. Filter according to claim 1, **characterized in that** the flange (3), on a bottom face, is provided with a tangentially running circumferential groove or step and **in that** the fastening means of the lid (5) are formed as clamping screws, which engage clamp-like at an upper face of the lid (5) and in the step or groove in the bottom face of the flange.

14. Filter according to one of the preceding claims, **characterized in that,** as a failure reserve, there provided more fastening means consisting of fasteners and bores, threaded holes or recesses in the lid and the flange, than are required for the proper operation of the filter.

## Revendications

1. Filtre, comprenant
- un boîtier de filtre (4) avec une face frontale ouverte et une bride (3) intégralement liée, et
- un couvercle (5) fixé de façon à pouvoir être détaché sur la face frontale ouverte,
sachant que sur une face extérieure du boîtier de filtre (4) dans la zone de la face frontale ouverte et en tant que moyen de fixation destiné à fixer le couvercle (5) de façon détachable se trouvent des paires de languettes (2) parallèles et à une certaine distance les unes des autres, qui définissent un espace intermédiaire convenant à la réception de boulons (23) avec des vis à œillets (21), des vis multipans ou des écrous, et
sachant que les languettes (2) reposent directement et de façon plane sur une face inférieure de la bride (3),
**caractérisé par le fait que**
les languettes (2) sont exclusivement reliées à la bride (3).

2. Filtre selon la revendication 1, **caractérisé par le fait que** la bride (3) est une bride en forme d'anneau réalisant un périmètre complet.

3. Filtre selon la revendication 2, **caractérisé par le fait que** dans la bride (3) se trouvent des perforations ou des réservations (31) pour le passage d'un boulon, d'une vis multipans ou d'une vis à œillet (21).

4. Filtre selon la revendication 3, **caractérisé par le fait que** les perforations ou réservations (31) sont dans la même ligne de fuite que les perforations, réservations ou les trous taraudés présents dans le couvercle (5).

5. Filtre selon une des revendications 3 ou 4, **caractérisé par le fait que** les perforations ou réservations (31) débouchent sur une face inférieure de la bride (3) dans les espaces intermédiaires des paires de languettes (2).

6. Filtre selon une des revendications 1-5, **caractérisé par le fait qu'**un bord de la bride (3) est dans la ligne de fuite d'un bord du couvercle (5).

7. Filtre selon une des revendications 1-6, **caractérisé par le fait que** les positions des paires de languettes (2) forment un polygone essentiellement équilatéral.

8. Filtre selon une des revendications 1-7, **caractérisé par le fait que** le couvercle (5) est fixé au moyen de vis, notamment de vis multipans ou à œillet (21) et d'un contre-écrou (22), de façon détachable sur le boîtier du filtre (4).

9. Filtre selon la revendication 8, **caractérisé par le fait que** dans le couvercle (5) se trouvent des trous taraudés destinés à réceptionner le filetage des vis (21).

10. Filtre selon la revendication 8, **caractérisé par le fait qu'**au moins une partie des vis (21) sont insérées depuis le bas de façon à ce que les têtes des vis (21) viennent se placer dans les espaces intermédiaires entre les languettes (2) et sont fixées par les languettes (2) contre toute rotation.

11. Filtre selon la revendication 8 ou 9, **caractérisé par le fait qu'**au moins une partie des vis (21) sont enfichées depuis le haut vers le bas à travers les trous présents dans le couvercle (5).

12. Filtre selon la revendication 11, **caractérisé par le fait qu'**une partie des vis (21) qui sont enfichées du haut vers le bas à travers le couvercle (5) sont vissés dans des moyens de fixation qui sont réalisés sous la forme de contre-écrous (22) tenus entre les languettes par paires (2) ou d'écrous fermement soudés avec une bride ou une face extérieure du boîtier du filtre.

13. Filtre selon la revendication 1, **caractérisé par le fait que** la bride (3) est pourvue d'une encoche ou d'un coude périphérique tangentiel sur une face inférieure et que le moyen de fixation du couvercle (5) est formé en tant que vis de serrage qui s'engrène à la manière d'une agrafe dans le coude ou l'encoche sur la face supérieure du couvercle (5) et sur la face inférieure de la bride.

14. Filtre selon une des revendications précédentes, **caractérisé par le fait qu'**en tant que réserve en cas de défaillance, davantage de possibilités de fixations consistant en moyens de fixation et perforations, trous taraudés ou réservations du couvercle et de la bride sont prévus que ce que le fonctionnement en bonne et due forme du filtre ne l'exige.
